(19) Europäisches Patentamt
European Patent Office
Office européen des brevets

(11) Numéro de publication: **0 206 892 B1**

(12) **FASCICULE DE BREVET EUROPEEN**

(45) Date de publication de fascicule du brevet: **11.12.91**

(51) Int. Cl.5: **G06F 15/68**, G06F 15/336

(21) Numéro de dépôt: **86401215.8**

(22) Date de dépôt: **05.06.86**

(54) **Procédé de traitement de signaux numérisés représentatifs d'une image origine.**

(30) Priorité: **10.06.85 FR 8508739**

(43) Date de publication de la demande:
**30.12.86 Bulletin 86/52**

(45) Mention de la délivrance du brevet:
**11.12.91 Bulletin 91/50**

(84) Etats contractants désignés:
**DE GB NL**

(56) Documents cités:

**1981 IEEE COMPUTER SOCIETY WORKSHOP ON COMPUTER ARCHITECTURE FOR PATTERN ANALYSIS AND IMAGE DATABASE MANAGEMENT, Hot Springs, Virginia, US, 11-13 novembre 1981, pages 159,160, Computer Society Press, New York, US; H.T. KUNG et al.: "A systolic 2-D convolution chip"**

**ICASSP 81 PROCEEDINGS, 30,31 mars - 1 avril 1981, Atlanta, Georgia, US, vol. 2 des 3, pages 658-661, IEEE International Conference on Acoustics, Speech and Signal Processing, New York, US; S.A. WHITE: "Architecture for a digital programmable image processing element"**

(73) Titulaire: **COMMISSARIAT A L'ENERGIE ATOMIQUE Etablissement de Caractère Scientifique Technique et Industriel
31/33, rue de la Fédération
F-75015 Paris(FR)**

(72) Inventeur: **Chabert, Bernard
Beaulieu
F-38470 Vinay(FR)**

(74) Mandataire: **Mongrédien, André et al
c/o BREVATOME 25, rue de Ponthieu
F-75008 Paris(FR)**

**EP 0 206 892 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de traitement de signaux numérisés représentatifs d'une image origine, et notamment d'une image définie par des lignes de balayage, telle qu'une image produite à partir de signaux vidéo par exemple.

Cette invention s'applique à la restauration et à l'amélioration des contrastes des images de type vidéo, à la détection des contours et à la structuration des images.

On sait traiter des signaux numérisés, représentatifs d'une image origine, définis par des lignes de balayage, grâce un module qui permet de traiter chaque élément d'image ou pixel en utilisant une méthode mathématique dite de convolution. Chaque pixel $a_{ij}$ de l'image origine à traiter est défini par son intensité a sous forme de E éléments binaires, et ses coordonnées i et j, i étant le numéro d'une ligne de balayage considérée de cette image origine et j étant le numéro du pixel sur cette ligne de balayage. L'image origine est traitée par convolution, par une fenêtre de convolution de dimensions L×P qui comprend L lignes de P coefficients. Chacun de ces coefficients de pondération $C_{l,k}$ est défini par sa valeur C et ses coordonnées l et k à l'intérieur de la fenêtre. Chaque fenêtre est centrée sur le pixel $a_{ij}$ correspondant. Le module de traitement fournit pour chaque pixel $a_{i,j}$ de l'image origine, un pixel $b_{i,j}$ d'une image convoluée, défini par son intensité b, sous forme de G éléments binaires et ses coordonnées i et j. Le pixel $b_{ij}$ est obtenu à partir de sommes successives de produits définis par la relation :

$$b_{i,j} = \sum_{l=1}^{L} \sum_{k=1}^{P} (a_{i+l-\frac{L+1}{2},\, j+k-\frac{P+1}{2}}) \times C_{l,k} \quad .$$

Dans cette relation l varie de 1 à L et k varie de 1 à P. Bien entendu, i, j, l, k, L, P, E, G sont des nombres entiers.

Un module connu de traitement par convolution est par exemple décrit dans la revue Computer Vision, Graphics and image processing, vol. 27, pages 115 à 123 (1984). Un module de ce type est aussi décrit dans les actes IEEE, dans un article intitulé "large Array VLSI filter", volume 83-CH 1929-9 (1983), pages 15 à 21.

Les procédés de traitement de signaux numérisés représentatifs d'une image origine, qui utilisent ce type de module, ne permettent en fait que de traiter des images dans lesquelles chaque ligne comprend un nombre prédéterminé N de pixels, chaque pixel étant représenté par un nombre fixe E d'éléments binaires, et dans laquelle la fenêtre de traitement par convolution présente des dimensions fixes L×P et des coefficients non programmables. Il en résulte qu'il est impossible, avec un module de traitement par convolution prédéterminé, de traiter des images dans lesquelles le nombre de pixels par ligne est différent de celui pour lequel le module est conçu, ou de traiter des images dans lesquelles chaque pixel est représenté par un nombre d'éléments binaires différent de celui des pixels pour lequel le module est conçu. Il est également très difficile à l'aide d'un tel module, de traiter des images dans lesquelles la fenêtre de convolution ne présente pas les dimensions L×P pour lesquelles le module est conçu. Généralement, le traitement des pixels d'une image dont les caractéristiques ne correspondent pas à celles des pixels de l'image à traiter, est impossible, même à l'aide de circuits compliqués associés à ce module. Il en résulte que pour une image présentant des caractéristiques prédéterminées (nombre de pixels par ligne, nombre d'éléments binaires définissant chaque pixel, dimensions de la fenêtre de convolution), il est nécessaire de construire un module spécifique, tenant compte des caractéristiques de cette image origine à traiter pour obtenir une image convoluée. Il en est de même lorsqu'on change d'application et qu'il est nécessaire de modifier les coefficients de la fenêtre de convolution. C'est le cas du circuit de traitement de pixels décrit dans le document intitulé IEEE Computer Society Workshop on Computer Architecture for Pattern Analysis and Image Database Management, Hot Springs, VA, US.11-13.11.81, pages 159, 160 (1981).

L'invention a pour but de remédier à ces inconvénients et notamment de fournir un procédé de traitement de signaux numérisés, représentatifs d'une image origine définie par des lignes de balayage, sans avoir à concevoir un module spécifique. Ce procédé permet, par association de modules de base permettant de traiter chacun une image de base présentant des caractéristiques prédéterminées (nombre de pixels par ligne, nombre d'éléments binaires par pixel, dimensions de la fenêtre de convolution prédéterminés), de traiter une image origine, quel que soit le nombre de pixels de chacune des lignes de cette image, ou quel que soit le nombre d' éléments binaires définissant chaque pixel de cette image, ou

quelles que soient les dimensions de la fenêtre de convolution définies pour le traitement de chaque pixel de cette image origine, ou quelles que soient les valeurs des coefficients de la fenêtre de convolution.

L'invention se rapporte à un procédé de traitement de signaux numérisés représentatifs d'une image origine définie par des lignes de balayage comprenant chacune un nombre prédéterminé d'éléments d'image ou pixels définis chacun par un nombre prédéterminé d'éléments binaires, caractérisé en ce qu'il consiste à sélectionner des modules de base de traitement par convolution des pixels d'une image de base, comprenant N pixels par ligne définis chacun par E éléments binaires, chaque pixel de l'image de base étant traité dans une fenêtre de convolution définie par ses dimensions LxP, L étant le nombre de lignes dans la fenêtre et P le nombre de pixels de chaque ligne dans cette fenêtre, ce module de base comprenant au moins une entrée de données à traiter pour recevoir les E éléments binaires de chaque pixel d'une ligne de M pixels, et au moins une sortie pour fournir N données traitées correspondant au traitement de chaque pixel de l'image de base, le procédé consistant ensuite à interconnecter des modules identiques au module de base pour obtenir l'image convoluée de l'image origine selon un réseau dans lequel le nombre des modules est déterminé à partir des dimensions L'xP' d'une fenêtre choisie pour traiter chaque pixel de l'image origine, ces dimensions étant supérieures aux dimensions LxP de la fenêtre du module de base, du nombre prédéterminé H d'éléments binaires définissant chaque pixel de l'image origine, ce nombre H étant un multiple du nombre E d'éléments binaires définissant chaque pixel de l'image de base, tel que H=nxE et du nombre prédéterminé N' de pixels par ligne de l'image origine, ce nombre N' étant un multiple du nombre N de pixels par ligne de l'image de base, tel que N'=qxN.

Selon une autre caractéristique de l'invention, dans le cas où le nombre H d'éléments binaires de chaque pixel de l'image origine est un multiple du nombre E d'éléments binaires de chaque pixel de l'image de base, tel que $H = n \times E$, il consiste à interconnecter n modules de base en série de sorte que la sortie de données traitées d'un module soit reliée une entrée de données traitées d'un module suivant, les H éléments binaires de chaque pixel de l'image origine étant séparés en n groupes de E éléments binaires, chaque module recevant sur son entrée de données à traiter un groupe correspondant de E éléments binaires, la sortie de données traitées du dernier module de la série fournissant les éléments binaires de chaque pixel de l'image convoluée.

Selon une autre caractéristique, dans le cas où le nombre prédéterminé N' de pixels par ligne de l'image origine est un multiple du nombre N de pixels par ligne de l'image de base, tel que $N' = q \times N$, il consiste à repérer du rang 1 au rang q chaque groupe de N pixels de l'image origine et à interconnecter q modules de base repérés du rang 1 au rang q, de sorte que pour chaque ligne de l'image origine, le module de rang 1 reçoive les éléments binaires de chaque pixel du groupe de N pixels de rang 1 ainsi que les éléments binaires des

$$\frac{p-1}{2}$$

pixels précédents et les éléments binaires des

$$\frac{p-1}{2}$$

pixels suivants, et ainsi de suite pour que le module de rang q reçoive les éléments binaires du groupe de N pixels de rang q et reçoive les éléments binaires des

$$\frac{p-1}{2}$$

pixels précédents et les éléments binaires des

$$\frac{p-1}{2}$$

pixels suivants, chaque module fournissant sur sa sortie de données traitées N pixels correspondants de

chaque ligne de l'image convoluée.

Selon une autre caractéristique, dans le cas où les dimensions L'xP' d'une fenêtre choisie pour traiter chaque pixel de l'image origine sont supérieures aux dimensions LxP de la fenêtre de traitement du module de base, il consiste à interconnecter rxs modules de base en r rangées et s colonnes, tels que les S modules de la première rangée reçoivent les éléments binaires de chaque pixel de S groupes de N+P-1 pixels de l'image origine, chaque groupe étant décalé de P pixels par rapport au précédent, et que les r-1 modules de chacune des colonnes reçoivent les éléments binaires de pixels déjà traités dans le module précédent de la même colonne, le procédé consistant ensuite à interconnecter des additionneurs disponibles dans chaque module de façon à effectuer la somme des résultats partiels de convolution fournis par chaque module sur une sortie série (SSPL), cette sommation de rxS résultats partiels étant effectuée en série dans des additionneurs à deux entrées.

Les caractéristiques et avantages de l'invention ressortiront mieux de la description qui va suivre, donnée en référence aux dessins annexés dans lesquels :

- la figure 1 représente de façon détaillée un module de base utilisé dans le procédé de traitement de l'invention,
- la figure 2 représente schématiquement une association de plusieurs modules de base utilisée dans le procédé de l'invention, dans le cas où chaque pixel de l'image origine comporte un nombre d'éléments binaires qui est multiple du nombre d'éléments binaires que peut traiter chaque module de base,
- la figure 3 représente schématiquement une association de plusieurs modules de base, utilisée dans le procédé de l'invention, dans le cas où chaque ligne de balayage de l'image origine comprend un nombre de pixels qui est multiple du nombre de pixels que peut traiter chaque module de base,
- les figures 4A, 4B, 4C et 5 représentent schématiquement une association des modules de base, utilisée dans le procédé de l'invention, dans le cas où la fenêtre de convolution choisie pour le traitement des pixels de l'image origine présente des dimensions supérieures aux dimensions de la fenêtre de convolution dans laquelle chaque module de base peut traiter chaque pixel.

La figure 1 représente de manière détaillée l'un des modules de base utilisé dans le procédé de traitement de l'invention. Ce module de base est capable de traiter une image comprenant N pixels par ligne de balayage, chaque pixel étant défini par un nombre E d'éléments binaires représentant une quantité codée en complément à 2 et le traitement de convolution étant effectué dans une fenêtre de dimensions LxP, centrée sur le pixel en cours de traitement. Ce module peut être qualifié de module de base puisque, comme on le verra plus loin en détail, l'image origine dont on veut traiter les pixels présente des caractéristiques différentes : cette image origine peut présenter un nombre de pixels par ligne de balayage, qui est multiple du nombre de pixels N que peut traiter le module de base ; dans cette image origine, chaque pixel peut être défini par un nombre d'éléments binaires qui est multiple du nombre d'éléments binaires E définissant chaque pixel que peut traiter le module de base ; enfin, chaque pixel de l'image origine peut être également traité par une fenêtre de convolution dont les dimensions L'xP' sont supérieures aux dimensions LxP de la fenêtre que peut traiter le module de base.

On suppose, comme indiqué plus haut, que la fenêtre de convolution présente, pour le module de base B de la figure 1, des dimensions L, P (L étant le nombre de lignes dans la fenêtre et P le nombre de coefficients de chaque ligne dans cette fenêtre). Ce module de base B comprend un registre tampon à décalage 1 d'une capacité de (N+P-1)xE éléments binaires (e.b ou bits), qui reçoit sur une entrée 2 appelée EPDO, les E bits de données relatives à tous les pixels d'une ligne de balayage, comprenant N pixels de E bits chacun. Ce registre a une capacité de (N+P-1)xE bits pour tenir compte des "effets de bord" que l'on rencontre dans une image de N pixels par ligne, lorsque la fenêtre choisie présente une largeur de P pixels. Le registre à décalages 1 reçoit également sur une autre entrée 3 de validation, un signal EVAL et sur une entrée 4 d'horloge, un signal d'horloge HDON. Le signal d'horloge permet d'enregistrer les E bits d'une nouvelle donnée présente sur l'entrée EPDO et de décaler d'une position les données déjà acquises dans le registre 1. Le signal d'horloge HDON est actif seulement si le signal EVAL est porté à la valeur logique "1".

Lorsque tous les bits définissant les N pixels d'une ligne de balayage, ainsi que ceux des

$$\frac{p-1}{2}$$

pixels précédents et des

$\frac{p-1}{2}$

pixels suivants (effets de bord) ont été enregistrés dans le registre 1, les $(N+P-1)\times E$ bits sont transférés en parallèle de la sortie 5 du registre 1 vers l'entrée 9 du registre 6. Ce transfert est déclenché par l'apparition du signal de synchronisation SYLI sur l'entrée 26 du circuit de contrôle 24 décrit plus loin.

Le module de base comprend aussi, dans le cas où la fenêtre de convolution définie pour ce module de base a une dimension de L lignes de P pixels chacune, L registres à décalages 6, 7, 8 (3 registres dans l'exemple représenté où on suppose que la fenêtre est définie par L=3 lignes de P=3 pixels). Le premier registre 6 comprend des entrées parallèles 9 qui sont reliées aux sorties parallèles 5 du registre 1. Ces registres comprennent chacun une sortie série. La sortie série 10 du registre 6 est reliée à une entrée série 11 du registre 7. La sortie série 12 du registre 7 est reliée une entrée série 13 du registre 8. Chaque registre 6, 7, 8, a une capacité de $(N-P+1)\times E\times 1$bit. Comme on le verra plus loin en détail, pour certains modes de mise en oeuvre de ce module de base, dans le procédé de l'invention, le premier registre 6 de la série de L registres comporte une entrée série 14, pouvant recevoir des données ESDO, d'un autre module de base semblable ; les bits représentatifs des données ESDO, sont relatifs à des pixels déjà traités par un autre module de base. Le dernier registre 8 de la série de L registres comprend également une sortie série 15, fournissant des bits représentatifs de données SSDO, relatives à des pixels déjà traités dans ce module de base. Les $P\times E$ dernières cellules de chacun des L registres 6, 7, 8 sont respectivement reliées par des sorties parallèles 16, 17, 18 de ces registres, à $L\times P\times E$ entrées d'un opérateur de convolution 20 de type connu, tel que décrit dans les documents précités et qui permet d'effectuer les sommes de produits successifs de convolutions définis par la relation :

$$b_{i,j} = \sum_{l=1}^{L} \sum_{k=1}^{P} (a_{i+l-\frac{L+1}{2},\ j+k-\frac{P+1}{2}}) \times C_{l,k}$$

Cet opérateur de convolution reçoit sur $L\times P\times F$ entrées 21, les bits représentatifs des coefficients $C_{l,k}$ appliqués au traitement de chaque pixel, par une fenêtre de $L\times P$ pixels, chaque coefficient étant défini par F bits. Ces coefficients sont chargés dans une mémoire 22 qui reçoit sur une entrée 23 appelée ENCO les F bits de chacun des coefficients codés en complément à deux. Ces coefficients sont mémorisés par l'application d'un signal d'horloge HCOE sur une entrée 31 de la mémoire 22. Chaque registre à décalages 6, 7, 8 de la série de L registres reçoit un signal d'horloge HCAL fourni par la sortie 25 du circuit de contrôle 24. Ce signal est aussi appliqué à l'opérateur de convolution 20 pour exécuter le calcul de convolution, à partir de tous les éléments binaires relatifs à une ligne de balayage et à partir des coefficients $C_{l,k}$.

L'opérateur de convolution 20 comporte une sortie 27 fournissant des bits représentatifs de données SPRE codées sur G bits, et correspondant aux pixels de l'image convoluée. Cet opérateur de convolution comprend aussi des sorties 28 et 29. La sortie 28 fournit des données SSEE correspondant à des résultats partiels de convolution, dans le cas où l'image à traiter comporte N pixels par ligne, chaque pixel étant défini par un nombre de bits qui est multiple du nombre E de bits définissant chaque pixel de l'image de base. La sortie série 29 fournit des données SSPL relatives des résultats partiels de convolution, dans le cas où l'image à traiter comporte N pixels de E bits par ligne de balayage, mais dans laquelle la fenêtre de convolution choisie présente des dimensions qui sont respectivement supérieures aux dimensions de la fenêtre de convolution dans laquelle le module de base effectue les traitements.

L'opérateur 20 de convolution comporte également une entrée série 30 recevant des données ESEE représentatives de résultats partiels de convolution provenant de la sortie SSEE d'un autre module de base, dans le cas où l'image à traiter comprend N pixels par ligne de balayage, mais dans laquelle chaque pixel est défini par un nombre de bits qui est multiple du nombre de bits E de chaque pixel que peut traiter le module de base..

Le circuit de contrôle 24 reçoit des signaux de commande DE/$\overline{DS}$ et SYLI respectivement sur ses entrées 37 et 26, et un signal d'horloge HORL sur l'entrée 32, ainsi que le signal INI permettant d'initialiser l'ensemble du module de base. A partir de ces signaux, le circuit de contrôle 24 fournit un signal d'horloge HCAL interne au module, destiné à séquencer les traitements nécessaires à l'obtention de N pixels de l'image convoluée. De plus, le circuit de contrôle 24 fournit les signaux nécessaires (ne figurant pas sur la

figure 1) à l'initialisation des différents éléments par le signal INI, au transfert du contenu du registre 1 vers le registre 6 commandé par l'apparition du signal SYLI, et nécessaires au module de traitement pour différencier le cas où les E bits des données de l'image origine sont supposés coder des nombres non signés, du cas où ces E bits sont supposés coder des nombres signés, suivant l'état logique du signal de commande DE/$\overline{DS}$.

Le module de base qui vient d'être décrit comprend en outre, selon l'invention, un premier registre secondaire à décalages 33 d'une capacité de P bits recevant sur des entrées 34, 35 les signaux d'horloge HDON, ainsi que le signal de validation EVAL. Une sortie série de ce registre à décalages est reliée à une entrée série d'un deuxième registre à décalages secondaire 36 d'une capacité de (N-P) bits, ce deuxième registre reçoit sur une autre entrée le signal d'horloge HDON. Le premier registre 35 fournit sur sa sortie, un signal SVAP permettant de valider, comme on le verra plus loin, l'enregistrement des données dans un autre module identique au module de base, dans le cas où la fenêtre de convolution choisie pour traiter l'image d'origine présente des dimensions L', P' qui sont respectivement supérieures aux dimensions L, P de la fenêtre de traitement du module de base. En fait, un signal SVAP est fourni dès que le nombre de pixels enregistrés dans ce module dépasse le nombre P de pixels définissant la fenêtre de traitement du module de base. Le deuxième registre 36 fournit un signal SVAN sur une sortie série. Ce signal SVAN permet de valider l'enregistrement de données dans un autre module identique au module de base lorsque le nombre de pixels par ligne de l'image d'origine est un multiple du nombre N de pixels par ligne que peut traiter le module de base. En fait, ce signal est fourni par un module de base dès que le nombre de pixels enregistrés dans le module dépasse le nombre N de pixels que peut traiter le module de base.

De plus, le module de base est pourvu d'un additionneur série 38 recevant le signal HCAL de l'horloge interne de traitement, fourni par le module de contrôle 24. Cet additionneur série 1 bit effectue l'addition d'un bit se présentant sur l'entrée 39 appelée ESPL1 avec soit un bit se présentant en même temps sur l'entrée 40 appelée ESPL2 si le signal RETA, appliqué à l'entrée 41, est porté à l'état logique "0", soit un bit présenté sur l'entrée 40, une période d'horloge HCAL plus tôt si le signal RETA est porté à l'état logique "1". Le bit résultat est alors présenté sur la sortie 42 appelée SSPLR. Cet additionneur est utilisé, dans le procédé de l'invention, dans le cas où la fenêtre de convolution choisie pour traiter l'image origine présente des dimensions L' et P' respectivement supérieures aux dimensions L et P de la fenêtre de traitement du module de base, comme on verra plus loin en détail.

La figure 2 représente schématiquement une interconnexion de n modules de base identiques à celui de la figure 1, utilisée dans le procédé de l'invention, dans le cas où le nombre H d'éléments binaires de chaque pixel de l'image origine à traiter est un multiple du nombre E d'éléments binaires de chaque pixel que peut traiter le module de base ($H=n \times E$). Ces modules de base 51, 52, 53 permettent dans cet exemple de traiter des pixels comprenant $H=3 \times E$ éléments binaires. Les H éléments binaires codant en complément à deux chaque pixel de l'image origine sont séparés en N groupes de E éléments binaires. Chaque module reçoit sur son entrée EPDO un groupe correspondant de E éléments binaires. Dans l'exemple choisi ($H=3E$), l'entrée 47 du module 51 reçoit les E éléments binaires de poids forts. L'entrée 48 du module 52 reçoit les E éléments binaires de poids moyens, tandis que l'entrée 49 du module 53 reçoit E éléments binaires de poids faibles. Les données représentatives de chaque pixel sont référencées EPDO sur la figure.

Les E bits de poids forts des données EPDO traités dans le module 51 sont supposés coder un nombre signé, et le signal DE/$\overline{DS}$ de ce module est fixé à l'état logique "0". Les E bits de poids moyens et faibles des données traités respectivement dans les modules 52 et 53 sont supposés coder des nombres non signés et le signal DE/$\overline{DS}$ de ces modules est fixé à l'état logique "1". La sortie SSEE de données traitées d'un module est reliée à une entrée ESEE de données traitées du module suivant. C'est ainsi par exemple que la sortie 43 du premier module 51 est reliée à l'entrée 44 du deuxième module 52, et que la sortie 45 du module 52 est reliée à l'entrée 46 du module 53.

Les données SPRE relatives à chaque pixel de l'image convoluée sont fournies sous forme de G éléments binaires sur la sortie 50 du dernier module 53. Chacun des modules reçoit également les signaux EVAL, HDON, HORL, INI et SYLI décrits plus haut, ainsi que les signaux HCOE et ENCO.

En fait, lorsque les données relatives à chaque pixel sont codées sur un nombre d'éléments binaires qui est multiple du nombre d'éléments binaires que peut traiter chaque module de base, le procédé de l'invention consiste à associer en cascade plusieurs modules identiques aux modules de base, à effectuer des traitements partiels de convolution, puis à additionner les résultats de ces traitements partiels en tenant compte du fait que les résultats partiels sont représentés avec des poids différents.

La figure 3 représente schématiquement l'interconnexion de modules identiques au module de base qui, conformément au procédé de l'invention, permet d'obtenir l'image convoluée d'une image origine, lorsque le nombre prédéterminé N' de pixels par ligne de cette image origine est un multiple du nombre N

de pixels par ligne de l'image de base, tel que N' = q×N. Le procédé consiste ici à repérer du rang 1 au rang q, chaque groupe de N pixels de l'image origine et à interconnecter q modules de base repérés du rang 1 au rang q.

Pour chaque ligne de l'image origine, le module de rang 1 reçoit les éléments binaires de chaque pixel du groupe de N pixels de rang 1 ainsi que les éléments binaires des

$$\frac{p-1}{2}$$

pixels précédents et des

$$\frac{p-1}{2}$$

pixels suivants, de cette ligne, et ainsi de suite jusqu'au module de rang q qui reçoit les éléments binaires du groupe de N pixels, de rang q. Ch = que module fournit sur sa sortie SPRE de données traitées, N pixels correspondant à chacun des groupes de rangs 1 à q de chaque ligne de l'image convoluée.

Dans l'exemple représenté sur la figure, on suppose que chaque ligne de l'image origine comprend N' = 2N pixels. Le procédé consiste ici à utiliser deux modules de base 60, 61 identiques. Les deux modules reçoivent les données EPDO relatives aux pixels de chaque ligne. Ces modules reçoivent également les signaux HDON, HORL, INI et SYLI, ainsi que DE/$\overline{DS}$. Le premier module, grâce au signal EVAL appliqué sur son entrée 62, traite les N premiers pixels de chaque ligne ; le deuxième module 61, grâce à un signal EVAL appliqué sur son entrée 63 provenant de la sortie de validation SVAN du premier module 60, traite les N pixels suivants de chaque ligne.

Chaque module reçoit également les signaux ENCO et HCOE. Le premier module fournit sur une sortie 65 des données traitées SPRE. Ces données sont relatives aux N premiers pixels de chaque ligne de l'image convoluée ; les données SPRE sont codées sur G éléments binaires. Le deuxième module 61 fournit sur sa sortie 64 les données SPRE relatives aux N pixels suivants de chaque ligne de l'image convoluée.

Les figures 4A, 4B, 4C représentent schématiquement une interconnexion de modules identiques aux modules de base, dans le cas où les dimensions L'×P' de la fenêtre, choisie pour traiter chaque pixel de l'image origine, sont respectivement supérieures aux dimensions L×P de la fenêtre de traitement du module de base. Le procédé consiste ici interconnecter r×s modules de base selon r rangées $R_1$, $R_2$, $R_3$ et s colonnes $C_1$, $C_2$, $C_3$, de sorte que les S modules de la première rangée $R_1$ reçoivent les éléments binaires de chaque pixel de S groupes de N + P-1 pixels de l'image origine, chaque groupe étant décalé de P pixels par rapport au précédent, et que les r-1 modules d'une même colonne, de la deuxième rangée $R_2$ à la dernière rangée $R_3$, reçoivent les éléments binaires de pixels déjà traités dans le module précédent de cette même colonne. Dans l'exemple décrit ici, r = s = 3. Ainsi les 3 modules 101, 102, 103 de la première rangée $R_1$ reçoivent sur l'entrée EPDO les E éléments binaires des pixels de chacune des lignes, ainsi que le signal d'horloge HDON. L'enregistrement des données dans le module 101 est validé par l'apparition du signal EVAL sur l'entrée 100 de ce module. Le signal EVAL est maintenu jusqu'à ce que les éléments binaires des N + P-1 pixels de chacune des lignes soient enregistrés. Le module 101 génère sur sa sortie 110 appelée SVAP, un signal correspondant au signal EVAL précédent retardé de P périodes d'horloge du signal HDON, la sortie 110 du module 101 est reliée à l'entrée 120, appelée également EVAL, du module suivant 102. Ce signal permet donc d'enregistrer dans le module 102, les éléments binaires d'un groupe de N + P-1 pixels décalé de P pixels par rapport au groupe enregistré dans le module 101. De la même façon le module 102 génère sur sa sortie 130 appelée SVAP, un signal correspondant au signal présent sur l'entrée 120, retardé de P périodes d'horloge du signal HDON, la sortie 130 du module 2, est reliée à l'entrée 140, appelée EVAL, du module 3. Ce signal permet donc d'enregistrer dans le module 103, les éléments binaires d'un groupe de N + P-1 pixels décalé de P pixels par rapport au groupe enregistré dans le module 102.

Les modules 104, 105, 106, 107, 108, 109 des rangées suivantes $R_2$, $R_3$, ne reçoivent pas les signaux EPDO et HDON. L'entrée HDON de ces modules est maintenue au niveau logique "0" permettant ainsi de valider l'entrée série ESDO de ces modules. La sortie 150, appelée SSDO, du module 101 est reliée à l'entrée 160, appelée ESDO, du module 104, module suivant de la première colonne $C_1$. La sortie 170 du module 104 est reliée à l'entrée 180 du module suivant 107 de cette même colonne $C_1$ Les mêmes connexions sont faites entre les modules 102, 105, et 108 de la deuxième colonne $C_2$, et entre les modules 103, 106 et 109 de la troisième colonne $C_3$. Ainsi les éléments binaires des pixels enregistrés dans le

module 101 se présentent en série sur la sortie 150 de ce module, à la cadence de l'horloge de calcul HCAL, après avoir subi un retard de L lignes soit L(N+P-1)E périodes d'horloge du signal HCAL. Ces éléments binaires sont alors enregistrés à la même cadence, dans le module 104, au niveau du premier registre à décalage 6 de la figure 1. Il en est de même pour le passage du module 104 au module 107. Le même raisonnement s'applique pour chacune des autres colonnes. Tous ces modules reçoivent les signaux INI, HORL, DE/$\overline{DS}$ et SYLI. Ils reçoivent également tous les éléments binaires des coefficients sur l'entrée ENCO. Ces éléments binaires sont mémorisés dans chacun des modules 101 à 109 respectivement par chacun des signaux d'horloge HCOE1 à HCOE9. Ainsi la mémorisation des LxP coefficients du module 101 est effectuée par L×P périodes d'horloge du signal HCOE1, les autres signaux d'horloge étant maintenus à l'état logique "0" ; puis la mémorisation des L×P coefficients du module 102, est effectuée par L×P périodes d'horloge du signal HCOE2, les autres signaux d'horloge étant maintenus à l'état logique "0" ; et ainsi de suite jusqu'à la mémorisation des L×P coefficients du module 109, par le signal d'horloge HCOE9.

Chacun des modules 101 à 109 fournit sur sa sortie appelée SSPL, un résultat série de convolution correspondant la portion de fenêtre traitée par chacun de ces modules. Les interconnexions suivantes consistent à réaliser la somme de tous ces résultats partiels en quatre phases, pour obtenir un résultat final fourni, dans l'exemple, par le module 109, sur la sortie 190 appelée SPRE et fournissant G bits. Dans la première phase les sortie SSPL des modules 101 109 respectivement repérées de 200 à 208, sont reliées 2 à 2 aux entrées d'additionneurs séries disponibles dans chacun des modules. Ainsi la sortie 200 du module 101 est reliée à l'entrée 209, appelée ESPL1, de ce même module et la sortie 203 du module 104 est reliée à l'entrée 300, appelée ESPL2 du module 101. De même la sortie 201 du module 102 et la sortie 204 du module 105 sont respectivement reliées aux entrées 301 et 302 du module 102 ; la sortie 202 du module 103 et la sortie 205 du module 106 sont respectivement reliées aux entrées 303 et 304 du module 103 ; la sortie 206 du module 107 et la sortie 208 du module 109 sont respectivement reliées aux entrées 305 et 306 du module 107. La sortie 207 du module 108 est reliée à l'entrée 307 appelée ESPL2, du module 105. Les additionneurs des modules 101, 102, 103 et 107 ont chacun leurs deux entrées reliées à des sorties fournissant des éléments binaires de même poids ; par conséquent, pour ces modules, le signal RETA est fixé au niveau logique "0", chacun des additionneurs réalise la somme de deux éléments binaires de même poids et fournit le résultat de même poids sur la sortie SSPLR après une période d'horloge du signal HCAL. Le signal RETA du module 105 est fixé au niveau logique "1" pour retarder d'une période d'horloge l'élément binaire de l'entrée ESPL2 qui est additionné un élément binaire provenant de la sortie 309 du module 102, sortie SSPLR de l'additionneur de ce module, qui a lui-même été retardé par cet additionneur. L'additionneur du module 105 est utilisé pour la deuxième phase de sommation des résultats partiels ainsi que l'additionneur du module 104 dont les entrées 400 et 401 sont respectivement reliées aux sorties 402 et 403 des additionneurs des modules 101 et 107 et dont le signal RETA est fixé au niveau logique "0". La sortie 404 de l'additionneur du module 103 est r=liée à l'entrée 405, appelée ESPL2, du module 106. Le signal RETA de ce module est fixé au niveau logique "1" pour la même raison que celle décrite ci-dessus pour le module 105. En effet, l'additionneur du module 106 réalise la troisième phase de la sommation entre les éléments binaires de son entrée 405, retardés, et les éléments binaires de son entrée 406 reliée à la sortie 407 du module 105. La sortie 408 du module 104 est reliée à l'entrée 409, appelée ESPL2, du module 109. Le signal RETA de ce module est fixé au niveau logique "1" pour la même raison que celle décrite ci-dessus pour le module 105. En effet l'additionneur du module 109 réalise la quatrième phase de la sommation des résultats partiels entre les éléments binaires de son entrée 409, retardés, et les éléments binaires de son entrée 500, reliée à la sortie 501 du module 106. Les résultats des N pixels de chaque ligne sont ensuite disponibles sur la sortie 190 du module 109 sous la forme de G bits.

En fait, la sommation des résultats partiels obtenus par chacun des modules 101 à 109 est effectuée en série en quatre phases comme schématisé sur la figure 5. La première phase consiste à additionner 2 à 2 les résultats fournis par les modules 101 et 104, 102 et 105, 103 et 106, et 107 et 109. La deuxième phase consiste à additionner d'une part dans le module 105 le résultat fourni par le module 108, retardé, avec le résultat fourni par l'additionneur du module 102 et d'autre part dans le module 104 les résultats fournis par les additionneurs des modules 101 et 107. La troisième phase consiste additionner dans le module 106 le résultat fourni par l'additionneur du module 103, retardé, avec le résultat fourni par l'additionneur du module 105. Enfin, la quatrième phase consiste à additionner dans le module 109 le résultat fourni par l'additionneur du module 104, retardé, avec le résultat fourni par l'additionneur du module 106. Ainsi, dans le cas d'une interconnexion de r×s module, on effectue une sommation de r×s résultats partiels dans les additionneurs à deux entrées décrits plus haut. Cette sommation de r×s résultats partiels nécessitent $\gamma$ phases de calcul ; $\gamma$ est tel que $2^{\gamma-1} < r \times s \leq 2^{\gamma}$.

Dans le cas où les dimensions L' et P' de la fenêtre choisie sont supérieures aux dimensions L et P de la fenêtre de traitement du module de base, il convient de réaliser l'interconnexion de r×s modules :

$r = 1$ + partie entière de $\frac{L'}{L}$
$s = 1$ + partie entière de $\frac{P'}{P}$.

Les s modules de la première rangée reçoivent les éléments binaires de chaque pixel d'un groupe de N pixels de l'image origine, ainsi que les éléments binaires des

$$\frac{p-1}{2}$$

pixels précédents et des

$$\frac{p-1}{2}.$$

pixels suivants, correspondant à une fenêtre élémentaire de p pixels par ligne ; les r-1 modules d'une même colonne reçoivent les éléments binaires du module précédent de la même colonne (après un retard correspondant à L lignes) au fur et à mesure du déroulement du traitement. Le procédé consiste, ici, en partant d'une image origine de N pixels par ligne repérés de 1 à N, à découper chaque ligne en s groupes de N + P-1 pixels, chaque groupe est décalé de P pixels par rapport au précédent. Le groupe de rang 1 comprend les N + P-1 pixels repérés de

$$-\frac{L'-1}{2} \text{ à } N+P-1-\frac{L'-1}{2},$$

le group de rang 2 comprend les N + P + 1 pixels repérés de

$$-\frac{L'-1}{2}+P \text{ à } N+2P-1-\frac{L'-1}{2},$$

et ainsi de suite jusqu'au groupe de rang s qui comprend les N + P-1 pixels repérés de

$$-\frac{L'-1}{2}+(S-1)P \text{ à } N+sP-1-\frac{L'-1}{2}.$$

## Revendications

1. Procédé de traitement de signaux numérisés représentatifs d'une image origine définie par des lignes de balayage comprenant chacune un nombre prédéterminé d'éléments d'image ou pixels définis chacun par un nombre prédéterminé d'éléments binaires, caractérisé en ce qu'il consiste à sélectionner des modules de base de traitement par convolution des pixels d'une image de base (B), comprenant N pixels par ligne définis chacun par E éléments binaires, chaque pixel de l'image de base étant traité dans une fenêtre de convolution définie par ses dimensions LxP comportant LxP coefficients de pondération organisés en L lignes et P colonnes, ce module de base comprenant au moins une entrée (2) de données à traiter pour recevoir les E éléments binaires de chaque pixel d'une ligne de N pixels, et au moins une sortie (27) pour fournir des données traitées correspondant au traitement de chaque pixel de l'image de base, le procédé consistant ensuite à interconnecter des modules identiques au module de base pour obtenir l'image convoluée de l'image origine selon un réseau dans lequel le nombre des modules est déterminé à partir des dimensions L'xP' d'une fenêtre choisie pour traiter chaque pixel de l'image origine, ces dimensions étant supérieures aux dimensions LxP de la fenêtre du module de base, du nombre prédéterminé H d'éléments binaires définissant chaque pixel de l'image origine, ce nombre H étant un multiple du nombre E d'éléments binaires définissant chaque pixel de l'image de base, tel que H = nxE et du nombre prédéterminé N' de pixels par ligne de l'image origine, ce nombre N' étant un multiple du nombre N de pixels par ligne de l'image de base, tel que N' = qxN.

2. Procédé selon la revendication 1, caractérisé en ce que dans le cas où le nombre H d'éléments binaires de chaque pixel de l'image origine est un multiple du nombre E d'éléments binaires de chaque pixel de l'image de base, tel que $H = n \times E$, il consiste à interconnecter n modules de base en série de sorte que la sortie (43) de données traitées d'un module (51) soit reliée à une entrée (44) de données traitées d'un module suivant (52), les H éléments binaires de chaque pixel de l'image origine étant séparés en n groupes de E éléments binaires, chaque module recevant sur son entrée de données à traiter un groupe correspondant de E éléments binaires, la sortie (50) de données traitées du dernier module de la série fournissant les éléments binaires de chaque pixel de l'image convoluée.

3. Procédé selon la revendication 1, caractérisé en ce que dans le cas où le nombre prédéterminé N' de pixels par ligne de l'image origine est un multiple du nombre N de pixels par ligne de l'image de base, tel que $N' = q \times N$, il consiste à repérer du rang 1 au rang q chaque groupe de N pixels de l'image origine et à interconnecter q modules de base repérés du rang 1 au rang q, de sorte que pour chaque ligne de l'image origine, le module (60) de rang 1 reçoive les éléments binaires de chaque pixel du groupe de N pixels de rang 1 ainsi que les éléments binaires des

$$\frac{P-1}{2}$$

pixels précédents et les éléments binaires des

$$\frac{P-1}{2}$$

pixels suivants, et ainsi de suite pour que le module (61) de rang q reçoive les éléments binaires du groupe de N pixels de rang q ainsi que les éléments binaires des

$$\frac{P-1}{2}$$

pixels précédents et les éléments binaires des

$$\frac{P-1}{2}$$

pixels suivants, chaque module fournissant sur sa sortie (64 ou 65) de données traitées, N pixels correspondants de chaque ligne de l'image convoluée.

4. Procédé selon la revendication 1, caractérisé en ce que dans le cas où les dimensions $L' \times P'$ d'une fenêtre choisie pour traiter chaque pixel de l'image origine sont supérieures aux dimensions $L \times P$ de la fenêtre de traitement du module de base, il consiste à interconnecter $r \times s$ modules de base en r rangées et s colonnes, de sorte que les s modules de la première rangée reçoivent les éléments binaires de chaque pixels de s groupes de $N + P-1$ pixels de l'image origine, chaque groupe étant décalé de P pixels par rapport au précédent, et que les r-1 modules de chacune des colonnes reçoivent les éléments binaires de pixels déjà traités dans le module précédent de la même colonne, le procédé consistant ensuite à interconnecter des additionneurs disponibles dans chaque module de façon à effectuer la somme des résultats partiels de convolution fournis par chaque module sur une sortie série (SSPL), cette sommation de $r \times s$ résultats partiels étant effectuée en série dans des additionneurs à deux entrées et nécessitant $\gamma$ phases de calcul, telles que $2^{\gamma-1} < r \times s \leq 2^{\gamma}$.

## Claims

1. Process for the processing of digitized signals representing an original image defined by the scanning lines, each having a predetermined number of image or picture elements, each defined by a predetermined number of bits, characterized in that it comprises selecting basic modules for the processing by convolution of image elements of a basic image (B) comprising N image elements per

line, each defined by E bits, each image element of the basic image being processed in a convolution window defined by its dimensions L×P comprising LxP weighting coefficients organized in L rows and P columns, said basic module comprising at least one input (2) for the data to be processed for receiving the E bits of each image element of a line of N image elements and at least one output (27) for supplying processed data corresponding to the processing of each image element of the basic image, the process then consisting of interconnecting modules identical to the basic module for obtaining the convoluted image of the original image in accordance with a network in which the number of modules are determined from the dimensions L'×P' of a window chosen for processing each image element of the original image, said dimensions exceeding the dimensions LxP of the basic module window, the predetermined number H of bits defining each image element of the original image, said number H being a multiple of the number E of bits defining each image element of the basic image, such that $H=n\times E$ and the predetermined number N' of image elements per original image line, said number N' being a multiple of the number N of image elements per line of the basic image, such that $N'=q\times N$.

**2.** Process according to claim 1, characterized in that in the case where the number H of bits of each image element of the original image is a multiple of the number of E of bits of each image element of the basic image, such that $H=n\times E$, it consists of interconnecting n basic modules in series, so that a processed data output (43) of one module (51) is connected to a processed data input (44) of the following module (52), the H bits of each image element of the original image being subdivided into N groups of E bits, each module receiving at its input for data to be processed a corresponding group of E bits, the processed data output (50) of the final module of the series supplying the bits of each image element of the convoluted image.

**3.** Process according to claim 1, characterized in that in the case where the predetermined number N' of image elements per line of original image is a multiple of the number N of image elements per line of the basic image, such that $N'=q+N$, it consists of marking from rank 1 to rank q each group of N image elements of the original image and interconnecting q basic modules marked from rank 1 to rank q, so that for each line of the original image, the rank 1 module (60) receives the bits of each image element of the group of N image elements of rank 1, as well as the bits of the

$$\frac{p-1}{2}$$

preceding image elements and the bits of the

$$\frac{p-1}{2}$$

following image elements and so on, so that the rank q module (61) receives the bits of the group of the N image elements of rank q and receives the bits of the

$$\frac{p-1}{2}$$

preceding image elements and the bits of the

$$\frac{p-1}{2}$$

following image elements, each module supplying at its processed data output (64 or 65) N corresponding image elements of each line of the convoluted image.

**4.** Process according to claim 1, characterized in that in the case where the dimensions L'×P' of a window

chosen for processing each image element of the original image exceed the dimensions LxP of the processing window of the basic module, it consists of interconnecting $r \times s$ basic modules in r rows and s columns, so that s modules of the first row receive the bits of each image element of S groups of N+P-1 image elements of the original image, each group being displaced by P image elements with respect to the former and in that the r-1 modules of each of the columns receive the bits of image elements already processed in the preceding module of the same column, the process then consisting of interconnecting adders available in each module so as to form the sum of the partial convolution results supplied by each module on a serial output (SSPL), said summation of $r \times S$ partial results being performed in series in adders having two inputs and requiring $\gamma$ calculating phases, such that $2^{\gamma-1} < r \times s \leq 2^{\gamma}$.

## Patentansprüche

1. Verfahren zum Verarbeiten von digitalisierten Signalen, die ein ursprüngliches Bild darstellen, das von Abtastlinien gebildet wird, die jeweils eine vorgegebene Anzahl von Bildelementen oder Pixeln umfaßt, die jeweils von einer vorgegebenen Anzahl von binären Elementen gebildet werden, dadurch gekennzeichnet, daß es darin besteht, Basisverarbeitungsmodule durch Faltung der Pixel eines Basisbilds (B) auszuwählen, das N Pixel pro Zeile umfaßt, die jeweils von E binären Elementen gebildet werden, wobei jedes Pixel des Basisbilds in einem Faltungsfenster bearbeitet wird, das durch seine Dimensionen $L \times P$ definiert wird und $L \times P$ Gewichtungskoeffizienten organisiert in L Zeilen und P Spalten aufweist, wobei dieses Basismodul wenigstens einen Eingang (2) für zu bearbeitende Daten zum Erhalten der E binären Elemente für jedes Pixel einer Zeile aus N Pixel und wenigstens einen Ausgang (27) umfaßt, um verarbeitete Daten bereitzustellen, die der Verarbeitung jedes Pixels des Basisbilds entsprechen, wobei das Verfahren anschließend darin besteht, mit dem Basismodul identische Module zu verbinden, um das gefaltete Bild des ursprünglichen Bildes entlang einem Netz zu erhalten, in dem die Anzahl der Module ausgehend von den Dimensionen $L' \times P'$ eines zum Bearbeiten jedes Pixels des ursprünglichen Bildes ausgewählten Fensters bestimmt wird, wobei diese Dimensionen über den Dimensionen $L \times P$ des Fensters des Basismoduls liegen, und zwar um eine vorgegeben Zahl H von binären Elementen, die jedes Pixel des ursprünglichen Bildes bilden, wobei diese Zahl H ein vielfaches der Anzahl E von binären Elementen ist, die jedes Pixel des Basisbildes bilden, so daß $H = n \times E$, und um eine vorgegebene Zahl N' von Pixeln pro Zeile des ursprünglichen Bildes, wobei die Zahl N' ein Vielfaches der Zahl N von Pixeln pro Zeile des Basisbildes ist, so daß $N' = q \times N$.

2. Verfahren nach Anspruch 1, dadurch gekennzeichnet, daß für den Fall, daß die Anzahl H von binären Elementen jedes Pixels des ursprünglichen Bildes ein vielfaches der Anzahl E von binären Elementen jedes Pixels des Basisbilds ist, so daß $H = n \times E$, es darin besteht, n Basismodule in Reihe derart miteinander zu verbinden, daß der Ausgang (43) für bearbeitete Daten eines Moduls (51) mit einem Eingang (44) für bearbeitete Daten eines folgenden Moduls (52) verbunden ist, wobei die H binären Elemente jedes Pixels des ursprünglichen Bildes in n Gruppen aus E binären Elementen unterteilt sind, wobei jedes Modul auf seinem Eingang für zu verarbeitende Daten eine entsprechende Gruppe aus E binären Elementen erhält, wobei der Ausgang (50) für verarbeitete Daten des letzten Moduls der Reihe die binären Elemente jedes Pixels des gefalteten Bildes bereitstellt.

3. Verfahren nach Anspruch 1, dadurch gekennzeichnet, daß für den Fall, daß die vorgegebene Anzahl N' von Pixeln pro Zeile des ursprünglichen Bildes ein Vielfaches der Anzahl N von Pixeln pro Zeile des Basisbildes ist, so daß $N' = q \times N$, es darin besteht, von Rang 1 bis Rang q jede Gruppe von N Pixeln des ursprünglichen Bildes zu markieren und q markierte Basismodule von Rang 1 bis Rang q so zu verbinden, daß für jede Zeile des ursprünglichen Bildes das Modul (60) des Ranges 1 die binären Elemente jedes Pixels der Gruppe aus N Pixeln des Ranges 1 ebenso wie die binären Elemente der (P-1)/2 vorausgehenden Pixel und die binären Elemente der (P-1)/2 nachfolgenden Pixel erhält und so weiter, so daß das Modul (61) des Ranges q die binären Elemente jedes Pixels der Gruppe aus N Pixeln des Ranges q ebenso wie die binären Elemente der (P-1)/2 vorausgehenden Pixel und die binären Elemente der (P-1)/2 nachfolgenden Pixel erhält, wobei jedes Modul an seinem Ausgang (64 oder 65) für verarbeitete Daten N Pixel bereitstellt, die jeder Zeile des gefalteten Bildes entsprechen.

4. Verfahren nach Anspruch 1, dadurch gekennzeichnet, daß für den Fall, daß die Dimensionen $L' \times P'$ eines zum Bearbeiten jedes Pixels des ursprünglichen Bildes ausgewählten Fensters über den Dimensionen $L \times P$ des Fensters zur Bearbeitung des Basismoduls liegen, es darin besteht, $r \times s$

Basismodule in r Zeilen und s Spalten so zu verbinden, daß die s Module der ersten Zeile die binären Elemente jedes Pixels von s Gruppen von N+P-1 Pixeln des ursprünglichen Bildes erhalten, wobei jede Gruppe um P Pixel bezüglich der vorhergehenden verschoben ist, und daß die r-1 Module jeder der Spalten die binären Elemente von schon in dem vorhergehenden Modul derselben Spalte verarbeiteten Pixeln erhalten, wobei das Verfahren anschließend darin besteht, in jedem Modul verfügbare Addierer miteinander zu verbinden, um eine Summe von Teilresultaten der Faltung, die von jedem Modul auf einem seriellen Ausgang (SSPL) erzeugt werden, zu bilden, wobei diese Addition von r×s Teilresultaten der Reihe nach in Addierern mit zwei Eingängen durchgeführt wird und Berechnungsphasen erfordert, so daß $2^{\gamma-1}<r\times s\leqq2^{\gamma}$.

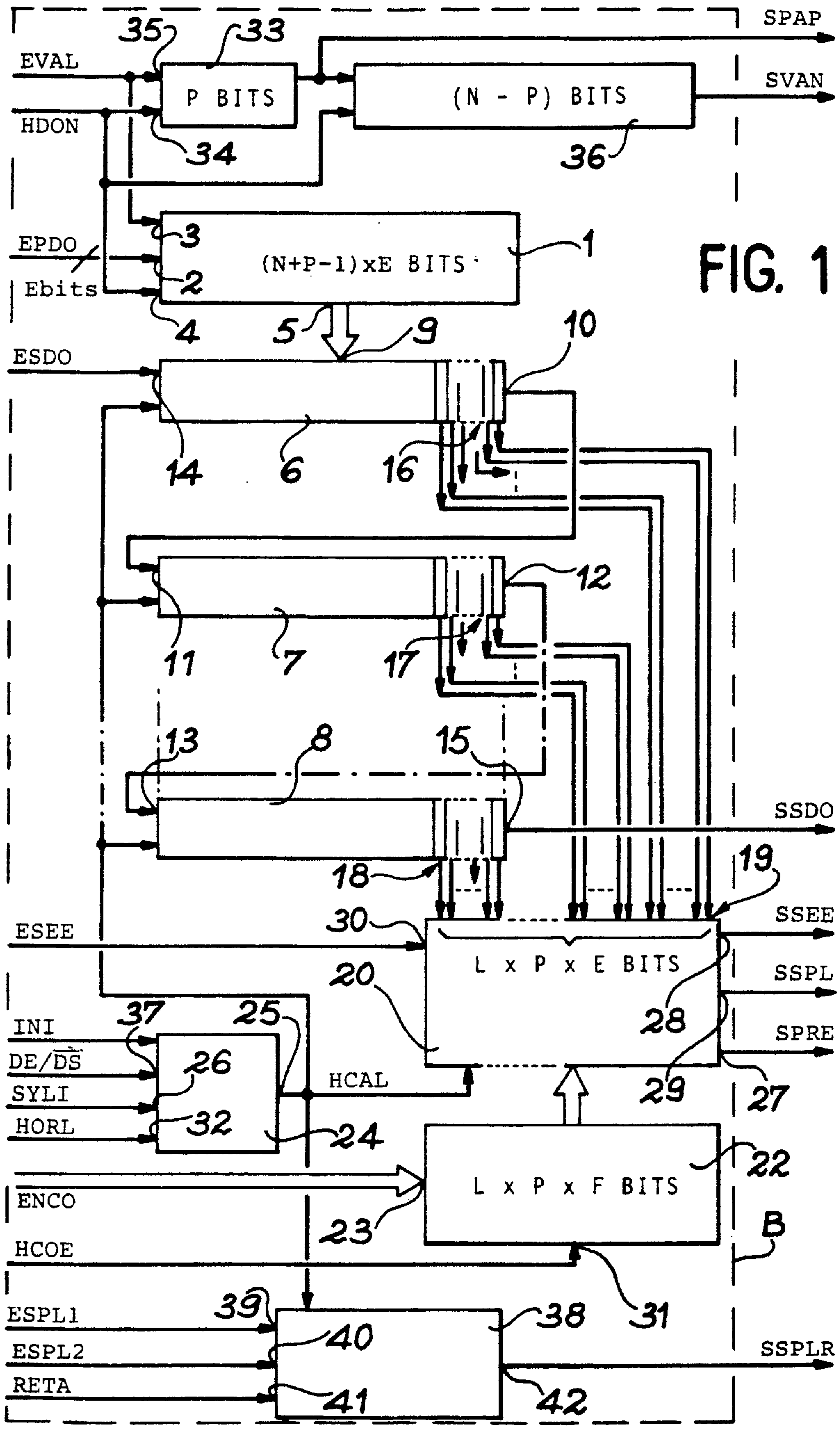
SPAP
SVAN
EVAL
HDON
P BITS
(N - P) BITS
(N+P-1)xE BITS
EPDO
Ebits
ESDO
SSDO
ESEE
SSEE
SSPL
SPRE
L x P x E BITS
INI
DE/DS
SYLI
HORL
HCAL
L x P x F BITS
ENCO
HCOE
B
ESPL1
ESPL2
RETA
SSPLR
1
2
3
4
5
6
7
8
9
10
11
12
13
14
15
16
17
18
19
20
22
23
24
25
26
27
28
29
30
31
32
33
34
35
36
37
38
39
40
41
42

FIG. 1

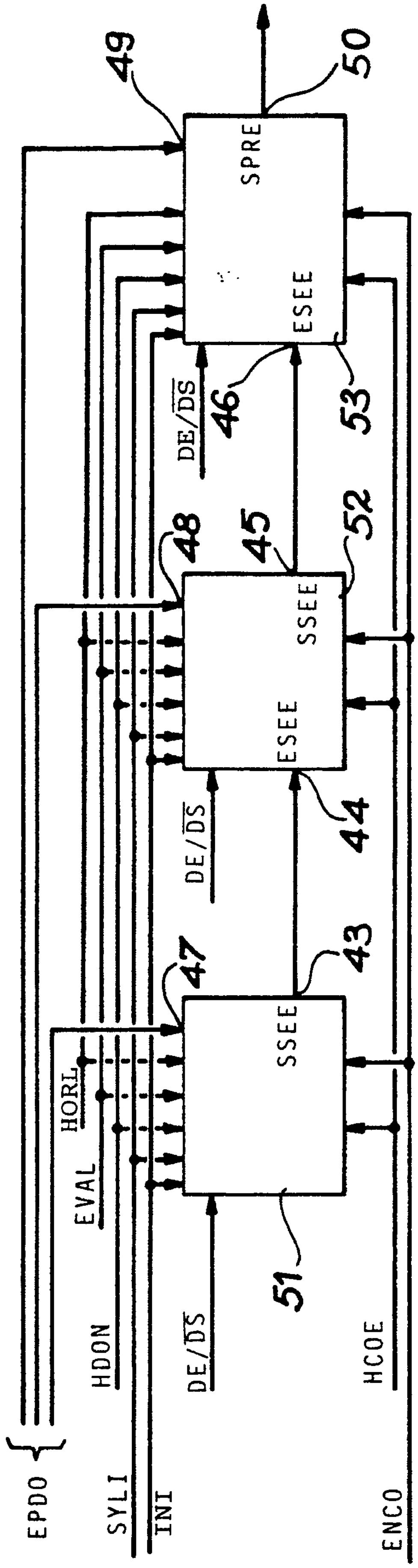
49
50
SPRE
ESEE
53
DE/$\overline{DS}$
46
48
45
52
SSEE
ESEE
44
DE/$\overline{DS}$
47
43
SSEE
HORL
EVAL
HDON
51
DE/$\overline{DS}$
HCOE
EPDO
SYLI
INI
ENCO

FIG. 2

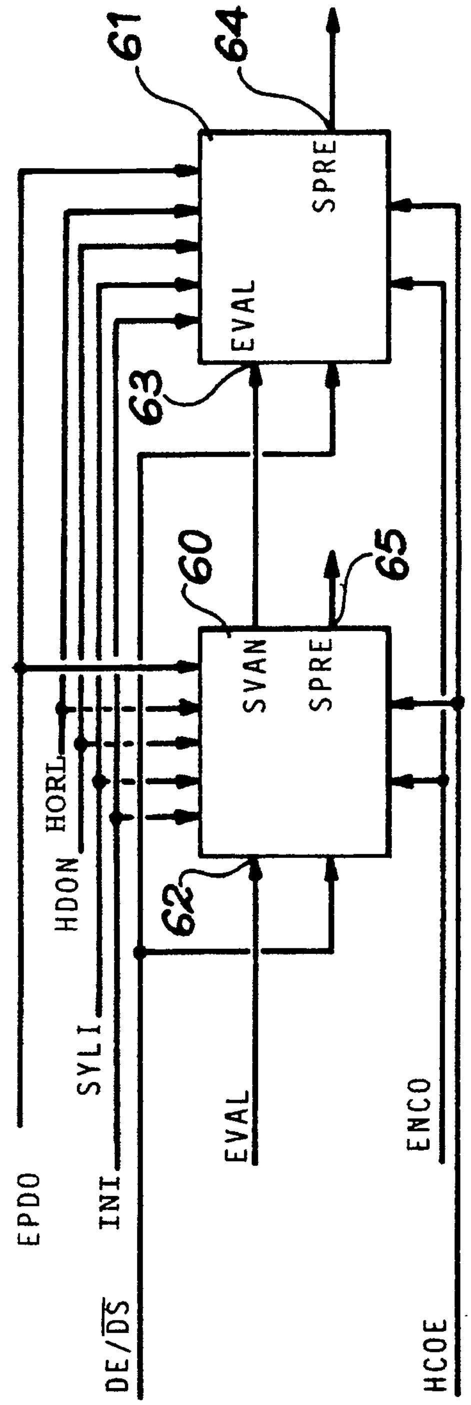
61
64
SPRE
EVAL
63
60
65
SVAN
SPRE
62
HORL
HDON
SYLI
EVAL
ENCO
EPDO
INI
DE/$\overline{DS}$
HCOE

FIG. 3

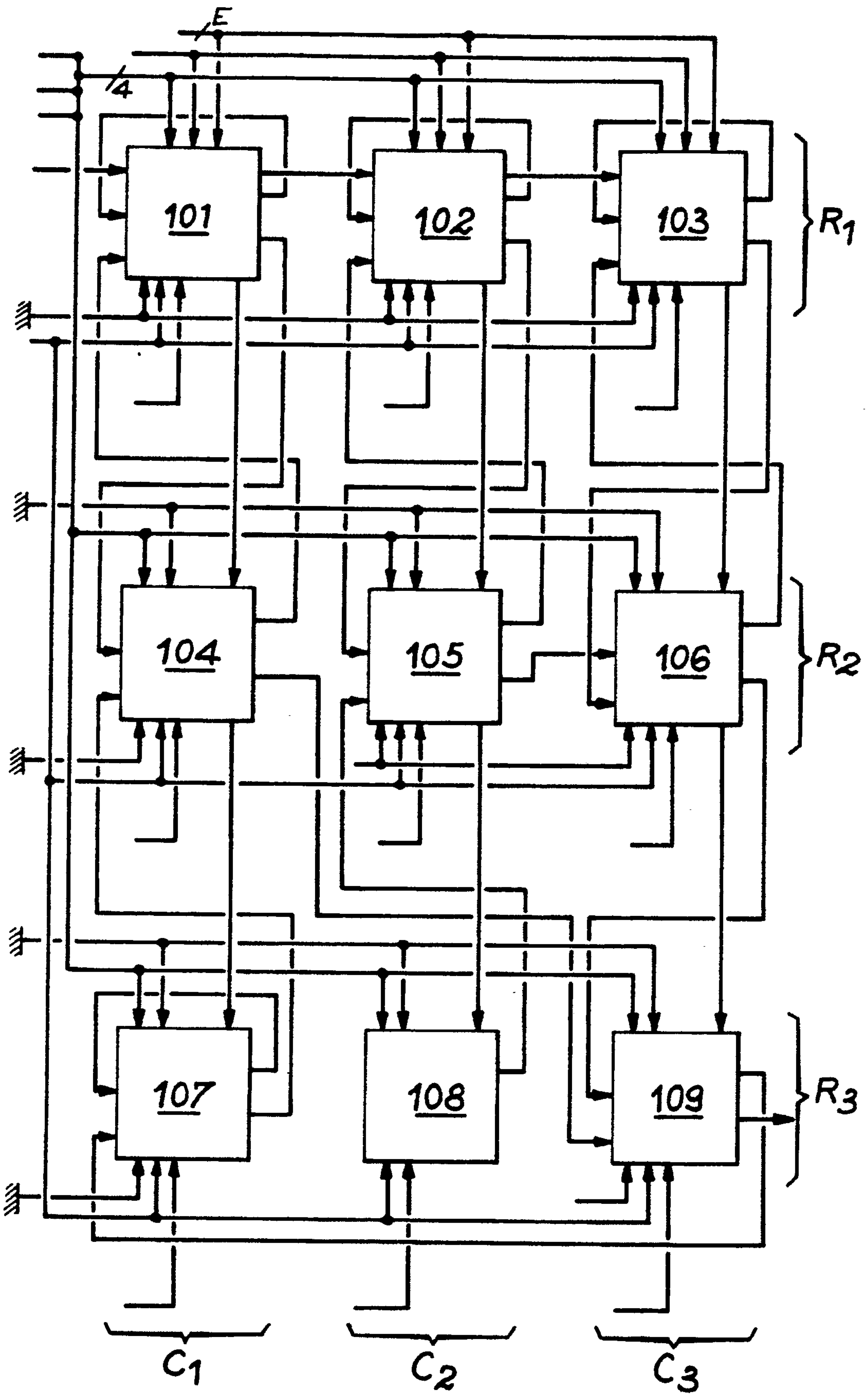


FIG. 4a

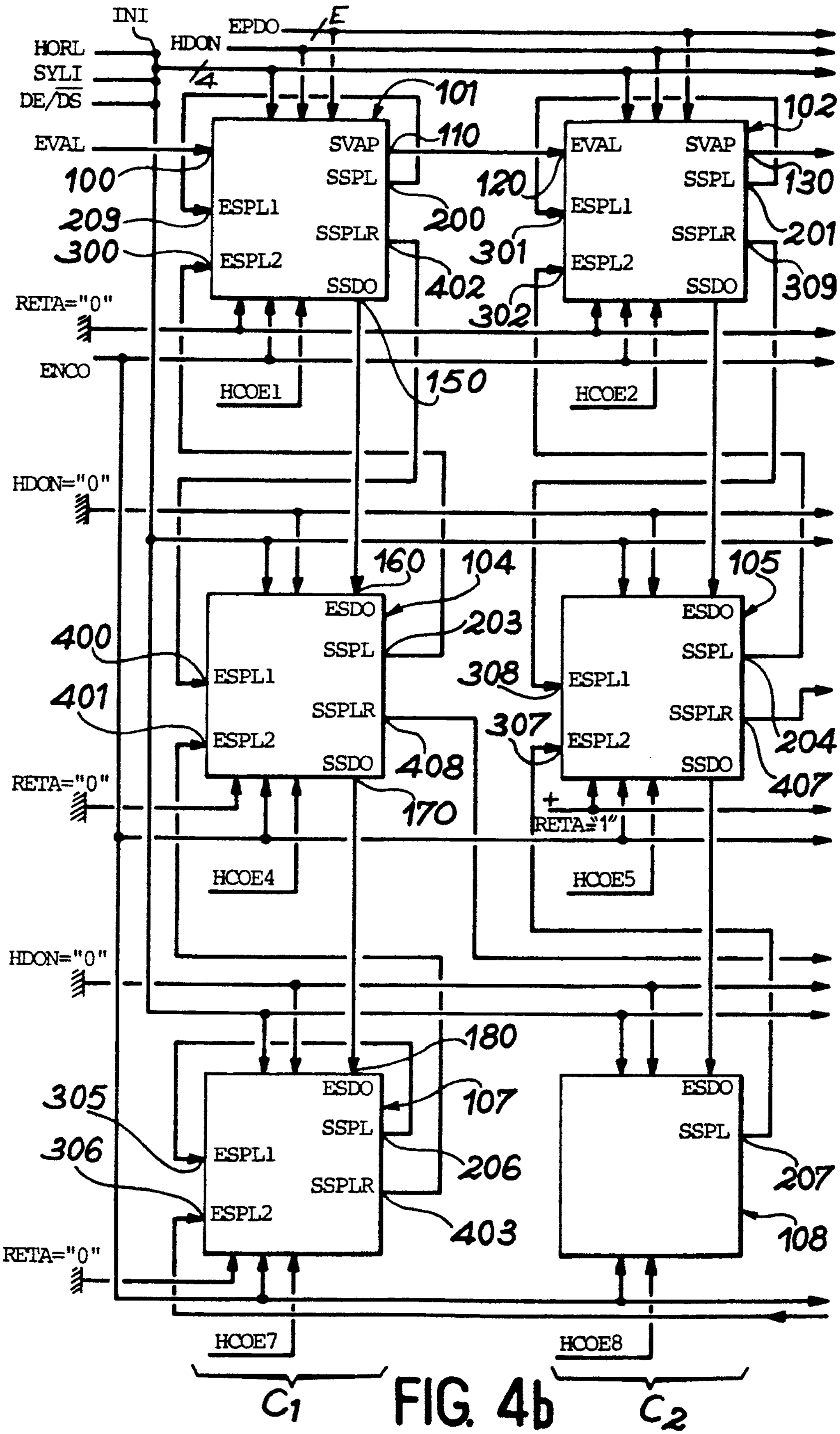
INI
EPDO
E
HORL
HDON
SYLI
4
DE/DS
EVAL
101
110
102
SVAP
SSPL
ESPL1
SSPLR
ESPL2
SSDO
100
209
300
120
200
130
201
301
402
309
302
RETA="0"
ENCO
HCOE1
150
HCOE2
HDON="0"
160
104
105
ESDO
400
203
401
308
307
204
408
407
170
RETA="1"
HCOE4
HCOE5
180
305
107
306
206
403
207
108
HCOE7
HCOE8

C1 FIG. 4b C2

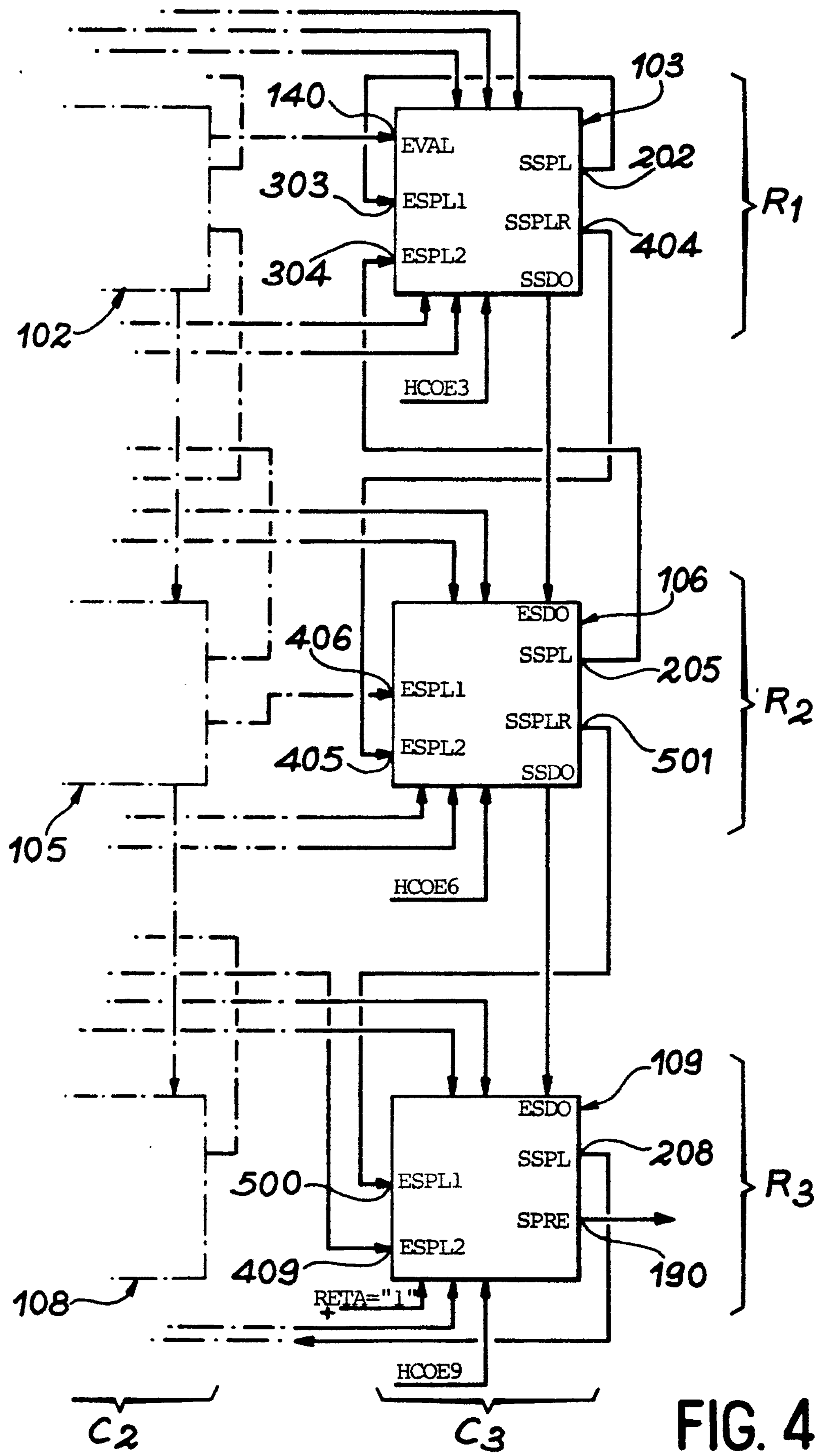
140
EVAL
303
ESPL1
304
ESPL2
SSPL
SSPLR
SSDO
103
202
404
R1
102
HCOE3
406
ESPL1
405
ESPL2
ESDO
SSPL
SSPLR
SSDO
106
205
501
R2
105
HCOE6
500
ESPL1
409
ESPL2
ESDO
SSPL
SPRE
109
208
190
R3
108
RETA="1"
HCOE9
C2
C3

FIG. 4c

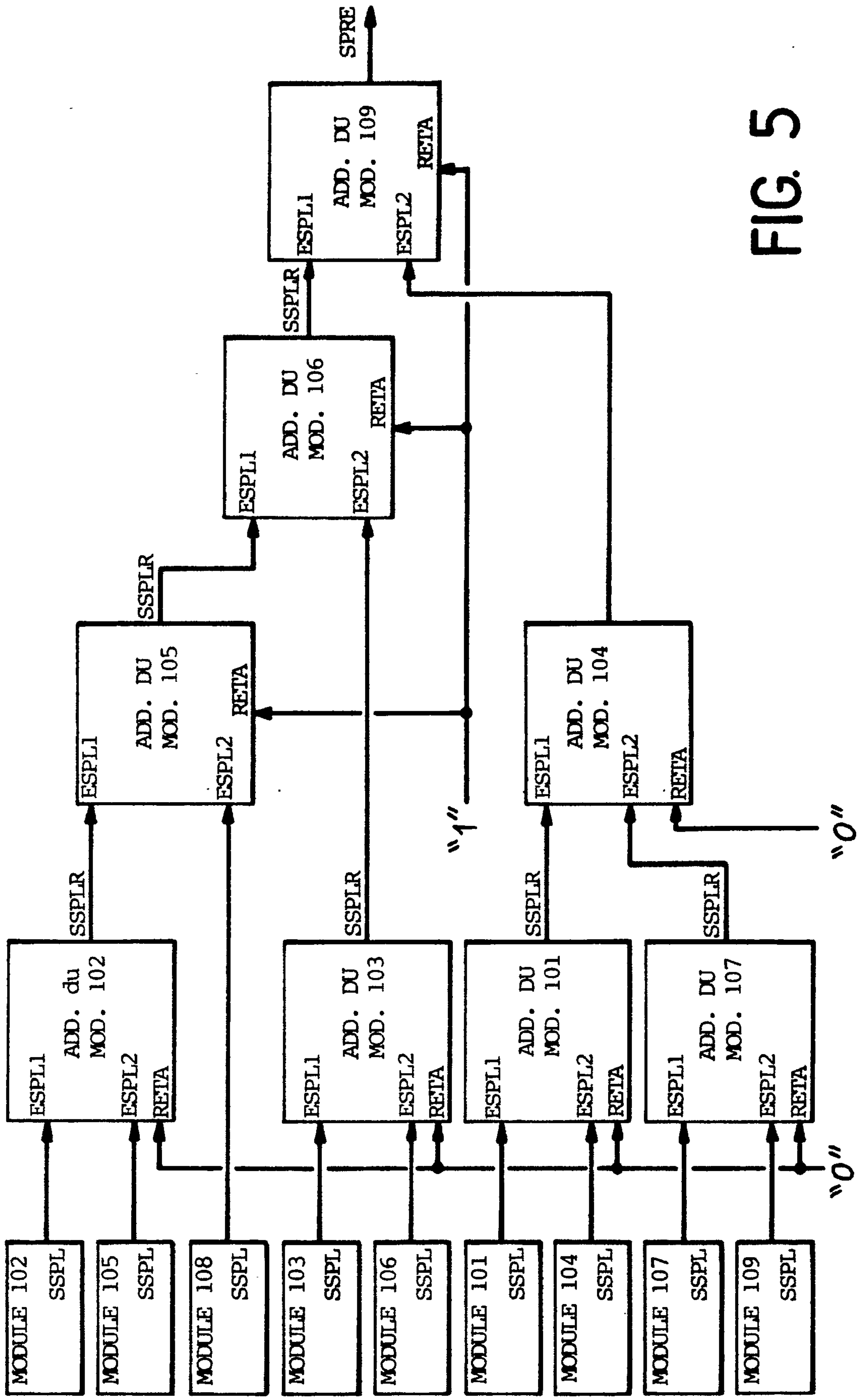
SPRE
ADD. DU MOD. 109
ESPL1
ESPL2
RETA
SSPLR
ADD. DU MOD. 106
ADD. DU MOD. 105
ADD. DU MOD. 104
"1"
"0"
ADD. du MOD. 102
ADD. DU MOD. 103
ADD. DU MOD. 101
ADD. DU MOD. 107
MODULE 102 SSPL
MODULE 105 SSPL
MODULE 108 SSPL
MODULE 103 SSPL
MODULE 106 SSPL
MODULE 101 SSPL
MODULE 104 SSPL
MODULE 107 SSPL
MODULE 109 SSPL

FIG. 5